# EUROPEAN PATENT APPLICATION

(11) **EP 4 687 346 A1**
(43) Date of publication of application: **04.02.2026**
(21) Application number: 25160160.5
(22) Date of filing: 26.02.2025
(51) Int. Cl.: H04N 21/442, H04N 21/472

(54) **DISPLAY DEVICE CONTROLLING CONTENT PLAYBACK**

(30) Priority: 30.07.2024 KR 20240101099
(71) Applicant: LG Electronics Inc., Yeongdeungpo-gu Seoul 07336 (KR)
(72) Inventor: GONG, Wonjune, 07796 Seoul (KR)
(74) Representative: Vossius & Partner Patentanwälte Rechtsanwälte mbB

(57) **Abstract**

A display device includes a user input interface through which a playback request for specific content is received from a remote control device, a processor that acquires a content identifier (ID) for the specific content, the previous accumulated playback time for the specific content, and the playback point in time for the specific content based on the playback request, and a display that is configured in such a manner that the specific content is displayed on the display. The processor determines whether or not the purchase of the specific content is refundable. When it is determined that the purchase of the specific content is refundable, the processor stores the accumulated playback time and the current playback point in time at a specific interval of time.

## Description

### TECHNICAL FIELD

The present disclosure relates to a display device that controls content playback. More particularly, the present disclosure relates to a display device that determines whether or not purchased content is refundable and then controls the playback of the purchased content.

### BACKGROUND

In recent years, digital TV services using wired or wireless communication networks have grown in popularity. The digital TV services can provide various services that existing analog broadcast services could not provide.

For example, Internet Protocol Television (IPTV) and smart TV services, which are types of the digital TV services, provide bidirectionality that enables users to actively select types of viewing programs, viewing times, and similar actions.

The IPTV and smart TV services may also provide various additional services, such as Internet search, home shopping, and online games, based on this bidirectionality. In this manner, a variety of content items have been produced and supplied in recent years. Therefore, information about which types of content items are played back on a display device that the user watches can be obtained. In addition, there has been increased emphasis on content recommendation services capable of recommending content based on what is preferentially displayed on the display device that the user watches.

In addition, with the popularization of display devices, there has been a trend toward households owning several display devices. Types of preferred content to be displayed on these display devices may vary according to the place where each display device is arranged and a user's preference. In addition, there has been increased emphasis on services capable of recommending content based on what is preferentially displayed on each display device.

### SUMMARY

In order to address the above-mentioned and other problems, one object of the present disclosure is to provide a display device capable of controlling content playback in conjunction with a server.

Another object of the present disclosure is to provide a display device capable of determining whether or not purchased content is refundable and controlling content playback and to provide a control server that manages the display device.

Still another object of the present disclosure is to provide a content service by storing information associated with the refund and playback of content on a device on an application that enables content to be individually purchased and utilizing the stored information.

Yet still another object of the present disclosure is to provide a content service by utilizing viewing information about each device including a display device instead of a server.

In order to accomplish the above-mentioned and other objects, according to one aspect of the present disclosure, there is provided a display device that controls content playback, the display device including: a user input interface through which a playback request for specific content is received from a remote control device; a processor that acquires a content identifier (ID) for the specific content, the previous accumulated playback time for the specific content, and the playback point in time for the specific content based on the playback request; and a display that is configured in such a manner that the specific content is displayed on the display. In the display device, the processor determines whether or not the purchase of the specific content is refundable. When it is determined that the purchase of the specific content is refundable, the processor stores the accumulated playback time and the current playback point in time at a specific interval of time. When it is determined that the purchase of the specific content is not refundable, the processor stores the current playback point in time at a specific interval of time.

In an embodiment, in the display device, the processor may execute a first application program and a second application program that manages the playback history of the specific content. When the playback request for the specific content is received, the processor may request information about the specific content from the second application program. The processor may receive the information about the specific content, which includes the accumulated playback time and the current time, from the second application program.

In an embodiment, in the display device, when the information about the specific content is received from the second application program, the processor may transfer a request to stream the specific content to a control server. The control server may transfer the request to stream the specific content to a content server that stores the specific content.

In an embodiment, in the display device, when the playback request is received, the processor may request first information about the specific content from the second application program. The processor may receive the first information about the specific content, which includes the accumulated playback time and the current playback point in time, from the second application program.

In an embodiment, in the display device, when the first information about the specific content is received from the second application program, the processor may transfer a request to stream the specific content to a control server. The processor may receive the specific content from a content server that stores the specific content, starting from a point in time after the current playback point in time, through the control server. The processor may control the display in such a manner that the received specific content is played back on the display, starting from a point in time after the current playback point in time.

In an embodiment, in the display device, when it is determined that the purchase of the specific content is refundable, the processor may store the accumulated playback time and the current playback point in time through the second application program. The processor may determine whether or not the stored accumulated playback time exceeds a threshold time. When it is determined that the accumulated playback time exceeds the threshold time, the processor may transfer second information indicating that the accumulated playback time exceeds the threshold time, to the control server.

In an embodiment, in the display device, when a response indicating that the second information is received is received from the control server, the processor may determine that the purchase of the specific content is not refundable. On the basis of the response indicating that the second information is received, the processor may enable the second application program to store the current playback point in time that is updated at a specific interval of time.

In an embodiment, in the display device, when the total number of users accessing the control server and users attempting to access the control server exceeds a first threshold value, the processor may execute control in a manner that reduces a threshold time for a response delay time. When the total number of users accessing the control server and users attempting to access the control server exceeds the first threshold value and the response is not received within the reduced threshold time, the processor may perform connection reconfiguration for a connection to a second control server. When the total number of users accessing the control server and users attempting to access the control server does not reach a second threshold value that is lower than the first threshold value, the processor may perform connection reconfiguration for a connection back to the control server. When a second response indicating that the connection reconfiguration is successfully performed is received, the processor may redetermine through the second application program whether or not the stored accumulated playback time exceeds the threshold time.

In an embodiment, in the display device, in a state where the connection reconfiguration is performed, the processor may transfer the second information indicating that the accumulated playback time exceeds the threshold time, to the control server. The processor may receive a response indicating that the second information indicating that the accumulated playback time exceeds the threshold time is successfully received, from the control server. On the basis of the response indicating that the second information is received, the processor may enable the second application program to store the current playback point in time that is updated at the specific interval of time.

In an embodiment, in the display device, the processor may receive a first request for a content list associated with played-back content items, from the remote control device. The processor may transfer a second request for a content playback history to the second application program. The processor may receive a response to the last access times for content items from the second application program. The processor may align the played-back content items according to the last access times.

In an embodiment, in the display device, the processor may display on the display the content list of the played-back content items aligned in decreasing order of the last access time. When one content item is selected from the content list, the processor may determine on the basis of the accumulated playback time for the selected content whether or not the selected content is refund-eligible.

In an embodiment, in the display device, when the selected content is refund-eligible, the processor may store the accumulated playback, the current playback time, and the last access time at an interval of time. When it is determined that the selected content is not refund-eligible, the processor may store the current playback time at a specific interval of time.

In an embodiment, in the display device, the processor may receive a request to temporarily pause specific content from the remote control device. The processor may receive the accumulated playback time and the current playback point in time for the specific content from the second application program. The processor may transfer a request to stop streaming the specific content, with information about the accumulated playback time being included in the request. The processor may determine, in a state where the playback of the specific content is temporarily paused, whether or not the purchase of the specific content is refundable.

In an embodiment, in the display device, in the state where the playback of the specific content is temporarily paused, when it is determined that the purchase of the specific content is refundable, the processor may store the accumulated viewing time, the current playback point in time, and the last access time. In the state where the playback of the specific content is temporarily paused, when it is determined that the purchase of the specific content is not refundable, the processor may store the current playback point in time for the specific content. In the state where the playback of the specific content is temporarily paused, when it is determined that the accumulated playback time for the specific content, the purchase of which is refundable, does not exceed a threshold time, the processor may store the accumulated playback time, the current playback point in time, and the last access time for the specific content.

In an embodiment, in a display device, the processor may receive a request to temporarily pause specific content from the remote control device. The processor may receive the accumulated playback time and the current playback point in time for the specific content from the second application program. The processor may transfer a request to stream the specific content, with information about the accumulated playback time being included in the request. The processor may determine, in a state where a temporary pause of the playback of the specific content is terminated, whether or not the purchase of the specific content is refundable.

In an embodiment, in the display device, in the state where a temporary pause of the playback of the specific content is terminated, when it is determined that the purchase of the specific content is refundable, the processor may store the accumulated viewing time, the current playback point in time, and the last access time at a specific interval of time. In the state where a temporary pause of the playback of the specific content is terminated, when it is determined that the purchase of the specific content is not refundable, the processor may store the current playback point in time for the specific content at the specific interval of time. In the state where a temporary pause of the playback of the specific content is terminated, when it is determined that the accumulated playback time for the specific content, the purchase of which is refundable, does not a threshold time, the processor may store the accumulated playback time, the current playback point in time, and the last access time for the specific content at the specific interval of time.

According to the present disclosure, there can be provided a display device that controls content playback in conjunction with a server.

According to the present disclosure, there can be provided a display device, which determines whether or not purchased content is refundable and then controls content playback, and a control server that manages the display device.

According to the present disclosure, a content service can be provided by storing and utilizing related information associated with a content refund and content playback on an application through which content is purchasable individually.

According to the present disclosure, a content service can be provided by utilizing viewing information on the basis of each of the devices, examples of which include a display device instead of a server.

According to the present disclosure, network traffic can be reduced by transferring a result to a server only at a specific point in time without periodically communicating with the server.

According to the present disclosure, when a user resumes playback of content at a later time, the user can view the content, starting from where the user last stopped viewing it on another device.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a block diagram illustrating a configuration of a display device according to an embodiment of the present disclosure;
FIG. 2 is diagram that is referenced to describe a content server according to an embodiment of the present disclosure;
FIG. 3 is a diagram that is referenced to describe a content provision system according to an embodiment of the present disclosure;
FIG. 4 is a flowchart for the process of operating a content playback time-based content provision system according to the present disclosure;
FIG. 5 is a screen that results from executing a second application on a display of the display device in FIG. 1;
FIG. 6 is a flowchart illustrating a content provision method according to the present disclosure, which is based on access time alignment in response to a request for a content playback list;
FIG. 7 is a flowchart illustrating the process of operating a content playback time-based content provision system according to an embodiment of the present disclosure;
FIG. 8 is a flowchart illustrating how the content provision system according to the embodiment of the present disclosure stores another parameter in response to a temporary pause request and executes adaptive control;
FIG. 9 is a flowchart illustrating how the content provision system according to the embodiment of the present disclosure stores another parameter in response to a request to terminate a temporary pause and executes the adaptive control; and
FIGS. 10 and 11 are flowcharts for a method of controlling content playback according to an embodiment of the present disclosure, the method being associated with content playback and refund and depending on whether or not the purchase of content is approved.

### DETAILED DESCRIPTION OF THE EMBODIMENTS

It should be noted that the technical terms used in this specification are only used to describe specific embodiments and are not intended to limit the present disclosure. A singular representation used herein may include a plural representation unless it represents a definitely different meaning from the context. In general, a suffix such as "module" and "unit" may be used to refer to elements or components. Use of such a suffix herein is merely intended to facilitate description in the specification, and the suffix itself is not intended to give any special meaning or function.

In this application, the terms "comprising" and "including" should not be construed to necessarily include all of the elements or steps disclosed herein, and should be construed not to include some of the elements or steps thereof, or should be construed to further include additional elements or steps.

In describing the present disclosure, if a detailed explanation for a related known function or construction is considered to unnecessarily divert the gist of the present disclosure, such explanation has been omitted but would be understood by those skilled in the art.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings. It should also be understood that each of the embodiments described below and combinations of those embodiments are all changes, equivalents, or substitutes which can belong to the idea and scope of the present disclosure.

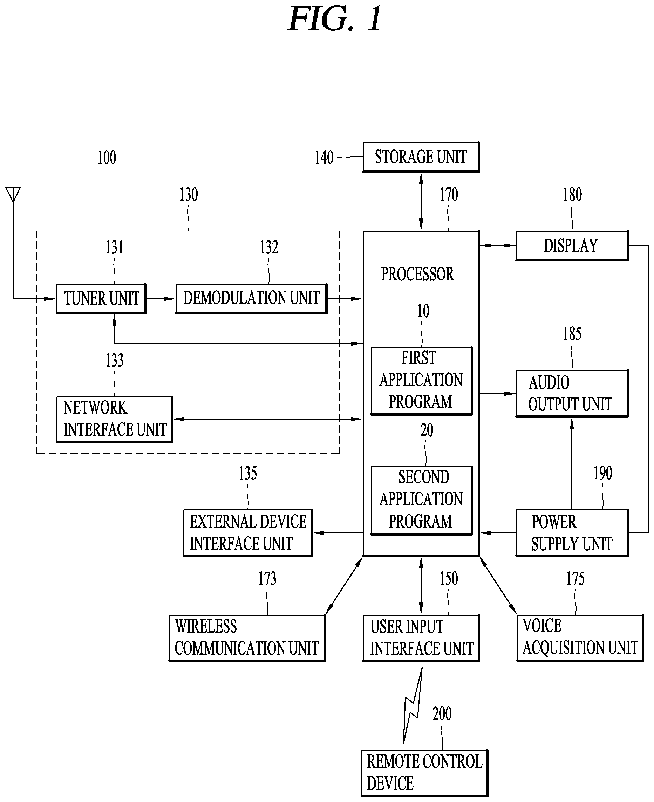

Embodiments disclosed in the present specification may be described in detail below with reference to the accompanying drawings. FIG. 1 is a block diagram illustrating a configuration of a display device 100 according to an embodiment of the present disclosure.

With reference to FIG. 1, the display device 100 may include a broadcast reception unit 130, an external device interface unit 135, a storage unit 140, a user input interface 150, a processor 170, a wireless communication unit 173, a voice acquisition unit 175, a display unit 180, an audio output unit 185, and a power supply unit 190.

The broadcast reception unit 130 may include a tuner 131, a demodulation unit 132, and a network interface unit 133.

The tuner 131 may select a broadcast station with a specific broadcast channel according to a command for channel-based broadcast station selection. The tuner 131 may receive a broadcast signal over a specific broadcast channel from the selected broadcast station.

The demodulation unit 132 may separate the received broadcast signal into a video signal, an audio signal, and a data signal associated with a broadcast program and may demodulate the video signal, the audio signal, and the data signal, which result from this separation, into an output-enabled format.

The network interface unit 133 may provide an interface for connecting the display device 100 to a wired/wireless network that includes an Internet network. Through the network interface unit 133, data may be transmitted or received to or from another user or another electronic device over a connected network or another network linked to the connected network.

The network interface unit 133 may have access to a predetermined web page over a connected network or another network linked to the connected network. That is, the network interface unit 133 may have access to a predetermined web page. Through the network interface unit 133, data may be transmitted or received to or from a specific server.

Then, through the network interface unit 133, content or data that are provided by a content provider or a network manager may be received. That is, through the network interface unit 133, content, such as a movie, an advertisement, a game, VOD, or a broadcast signal, that is provided from a content provider or a network manager, along with information associated with the content, may be received over a network.

In addition, through the network interface unit 133, firmware update information and an update file that are provided by the network manager may be received, and data may be transmitted to an Internet or content provider, or to the network manager.

Through the network interface unit 133, a desired application may be selected and received from among applications open to the public over a network.

The external device interface unit 135 may receive an application or an application list from an adjacent external device and may transfer the received application or application list to the processor 170 or the storage unit 140.

The external device interface unit 135 may provide a connection path between the display device 100 and the external device. Through the external device interface unit 135, one or more of the following may be received and transferred to the processor 170: an image or audio, each of which is output from the external device that is connected either wirelessly or via a wired connection to the display device 100. The external device interface unit 135 may include a plurality of external input terminals. The external terminal input terminals may include an RGB terminal, one or more High Definition Multimedia Interfaces (HDMI) terminals, and a component terminal.

An image signal of the external device that is input through the external device interface unit 135 may be output on the display unit 180. A voice signal of the external device that is output through the external device interface unit 135 may be output through the audio output unit 185.

The external device connectable to the external device interface unit 135 may, for example, be one of the following: a set-top box, a Blu-ray player, a DVD player, a game device, a sound bar, a smartphone, a PC, a USB memory device, or a home theater.

In addition, some of the content data stored in the display device 100 may be transmitted to a user selected from among other users pre-registered with the display unit 100 or to an electronic device selected from among other electronic devices pre-registered therewith.

A program for processing and controlling each signal within the processor 170 may be stored in the storage unit 140. Furthermore, an image, voice, or data signal, each of which is signal-processed may be stored in the storage unit 140.

In addition, an image, voice, or data signal, each of which is input from the external device interface unit 135 or the network interface unit 133, may also be stored in the storage unit 140 through a temporary storage function. Furthermore, information about a predetermined image may also be stored in the storage unit 140 through a channel storage function.

An application or an application list, each of which is input from the external device interface unit 135 or the network interface unit 133, may be stored in the storage unit 140.

Content files (a moving image file, a still image file, a music file, a text file, an application, and the like) stored in the storage unit 140 may be played back on the display device 100 for a user's viewing.

Through the user input interface 150, a signal that is input by the user may be transferred to the processor 170, and a signal may be transferred from the processor 170 to the user. For example, the user input interface 150 may receive control signals for power on/off, channel selection, screen setting, and similar functions from a remote control device 200 and process them in compliance with various communication standards such as Bluetooth, Ultra-Wideband (UWB), ZigBee, Radio Frequency (RF), and Infrared. Alternatively, the user input interface 150 may process a control signal from the processor 170 for transmission to the remote control device 200.

In addition, through the user input interface 150, a control signal that is input from local keys (not illustrated), such as a power key, a channel key, a volume key, and a setting key, may be transferred to the processor 170.

An image signal that is image-processed in the processor 170 may be input into the display unit 180, and an image corresponding to the image signal may be displayed thereon. In addition, the image signal that is image-processed in the processor 170 may be input into an output device through the external device interface unit 135.

The voice signal that is processed in the processor 170 may be output to the audio output unit 185. In addition, the voice signal that is processed in the processor 170 may be input into the external output device through the external device interface unit 135.

Moreover, the processor 170 may control the overall operation of display device 100.

In addition, the processor 170 may control the display device 100 by executing a user command that is input through the user input device 150 or an internal program. The processor 170 may enable an application or an application list, each of which is desired by the user, to be downloaded into the display device 100 by making a connection to a network. The processor 170 may be configured to control the display device 100 by executing at least one application program. By executing a first application program 10, it may be determined, on the basis of the viewing history and playback time for specific content, whether or not the specific content has been purchased, played back, refunded, resold, or subjected to similar actions. By executing a second application program 20, information about the playback history and playback time for specific content and other related information may be stored and managed.

The processor 170 enables channel information or the like selected by the user, along with the processed image or voice signal, to be output on the display unit 180 or output through the audio output unit 185.

In addition, in response to an external device image playback command received through the user input interface 150, the processor 170 may enable an image signal or a voice signal, each of which is input from an external device, for example, a camera or a camcorder through the external device interface unit 135, to be output on the display unit 180 or output through the audio output unit 185.

The processor 170 may control the display unit 180 in such a manner that an image is displayed thereon. For example, the processor 170 may control the display unit 180 in such a manner that a broadcast image input through the tuner 131, an external input image input through the external device interface unit 135, an image input through the network interface unit, or an image stored in the storage unit 140 is displayed thereon. In this manner, the image displayed on the display unit 180 may be a still image or a moving image and may be a 2D image or a 3D image.

In addition, the processor 170 controls the display unit 180 in such a manner that content stored within the display device 100, received broadcast content, or external input content input from the outside is played back. Such content may be in various formats, such as a broadcast image, an external input image, an audio file, a still image, a connected web image, and a text file.

The wireless communication unit 173 may perform communication either wirelessly or via wired connection. The wireless communication unit 173 may perform short-range communication with an external device. To this end, the wireless communication unit 173 may support short-range communication using at least one of the following technologies: Bluetooth^{™}), Bluetooth Low Energy (BLE), Radio Frequency Identification (RFID), Infrared Data Association (IrDA), Ultra-Wideband (UWB), ZigBee, Near Field Communication (NFC), Wireless-Fidelity (Wi-Fi), Wi-Fi Direct, or Wireless Universal Serial Bus (USB). The wireless communication unit 173 may support wireless communication over short-range wireless area networks between the display device100 and a wireless communication system, between the display device 100 and a different display device 100, or between the display device 100 and a network on which the display device 100 or an external server is located. The short-distance wireless communication may be short-range Wireless Personal Area Networks.

The different display device 100 here may be a mobile terminal, such as a wearable device (for example, a smartwatch, smart glasses, or a head-mounted display (HMD)) or a smartphone, each of which is capable of interchanging data with the display device 100 according to the present disclosure. The wireless communication unit 173 may detect (or recognize) a communication-capable wearable device in the vicinity of the display device 100. Moreover, in a case where the detected wearable device is a device authenticated to communicate with the display device 100 according to the present disclosure, the processor 170 may transmit at least one portion of the data processed in the display device 100 to the wearable device through the wireless communication unit 173. Therefore, a user of the wearable device may use the data processed in the display device 100 through the wearable device.

The voice acquisition unit 175 may acquire audio, The voice acquisition unit 175 may include at least one microphone (not illustrated) and, through the microphone (not illustrated), may acquire audio in the vicinity of the display device 100.

The display unit 180 may convert an image signal, a data signal, and an OSD signal, all of which are processed in the processor 170, into RGB signals, respectively, thereby generating drive signals. Alternatively, the display unit may convert an image signal, a data signal, and the like, all of which are received in the external device interface unit 135, into RGB signals, respectively, thereby generating drive signals.

The display device 100 illustrated in FIG. 1 is only an embodiment of the present disclosure. Therefore, depending on the specifications of the actually embodied display device 100, some of the illustrated constituent elements may be integrated or omitted, or may each be separated into constituent elements.

That is, according to need, two or more constituent elements may be integrated into one constituent element, or one constituent element may be separated into two or more constituent elements. In addition, a function performed in each block is only for describing an embodiment of the present disclosure, and a specific operation or device for such a function does not impose any limitation on the scope of the claims of the present disclosure.

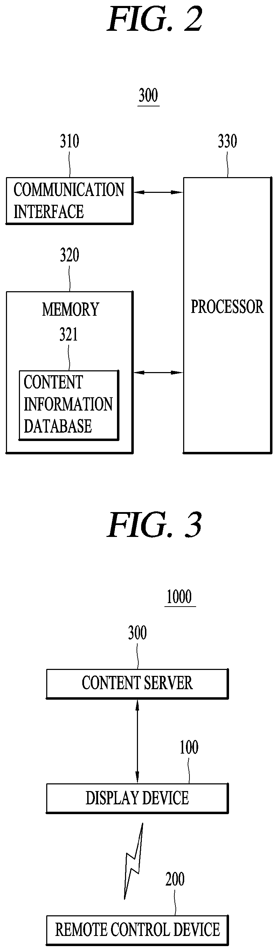

FIG. 2 is a diagram that is referenced to describe a content server according to an embodiment of the present disclosure.

The content server 300 may provide a recommendation service for recommending content favorable to a viewer who uses the display device 100.

The content server 300 may include a communication interface 310, a memory device 320, and a processor 330.

The content server 300 may transmit and receive data to and from at least one display device 100 through the communication interface 310 over wired and wireless communications.

The memory device 320 may include a content information database 321. Information associated with content played back on each device may be stored in the content information database 321. For example, content playback information, content setting information, or application installation information, each of which is associated with the identification information of each device, may be stored in the content information database 321.

In a case where a content recommendation request is received from the display device 100 or an external device, the processor 330 may recommend content optimized for each device on the basis of data stored in the content information database 321.

FIG. 3 is a diagram that is referenced to describe a content provision system 1000 according to an embodiment of the present disclosure.

The content provision system 1000 may include at least one display device 100, at least one remote control device 200, and the content server 300.

With reference to FIGS. 1 to 3, the processor 170 of the display device 100 may play back content.

In addition, the processor 170 may generate content playback information about the played-back content. In addition, the processor 170 may generate the content setting information, which is information about image quality, volume, and the presence or absence of a preference channel.

The content playback information may include at least one of the following: content identification information about the played-back content, content genre information, information about content playback starting point in-time, information about content playback ending point-in-time, or total content playback time.

The content setting information may include at least one of the following: image quality information, which is set for content during playback, volume information, or preference channel information about whether or not the user has registered a channel, over which content is provided, as a preference channel.

The processor 170 may transmit the device identification information of the display device 100, the generated content playback information, and the generated content setting information to the content server 300 through the communication interface. The device identification information may be a unique identification number for distinguishing the display device 100 from other devices.

The content server 300 may store the content playback information and the content setting information, which are received from the display device 100, in the database 321 in a manner that is associated with the device identification information.

The processor 170 may receive a content recommendation command, as an input, through the user input unit interface unit 150 or the voice acquisition unit 175.

In a case where the content recommendation command is received as an input, the processor 170 may transmit the device identification information of the display device 100 and a content recommendation request to the content server 300 through the communication interface.

Through the communication interface 310 of the content server 300, the device identification information and the content recommendation request may be received from the display device 100.

The processor 330 of the content server 300 may acquire the content playback information and the content setting information, which are associated with the display device 100, from the content information database 321 on the basis of the device identification information.

The processor 330 may generate content recommendation information and recommendation setting information for the display device 100 on the basis of the content playback information and the content setting information. The content recommendation information may include recommendation content identification information and recommendation content genre information about at least one recommendation content item. In addition, the recommendation setting information may include recommendation image-quality setting information and preference channel information.

The processor 330 may transmit the content recommendation information and the recommendation setting information to the display device 100 through the communication interface 310.

The processor 170 may receive the content recommendation information and the recommendation setting information from the content server 300 through the communication interface.

The processor 170 may display at least one recommendation content item on the basis of the received content recommendation information. In addition, when a command for playing back recommendation content is input through the user input unit interface unit 150 or the voice acquisition unit 175, the processor 170 may play back the recommendation content after setting the image quality of the recommendation content, which is to be played back, on the basis of the received recommendation setting information.

The processor 170 may play back the recommendation content after setting the image quality thereof, and, in a case where the user inputs a change to the preference channel, may make a change to the preference channel on the basis of the preference channel information.

The display device 100 may mirror the content whose playback is in progress to an external device. Examples of the external devices may include a different display device and a mobile device. In this case, content that is mirrored may be viewed through the external device. Therefore, viewing information about the content that is mirrored is necessary as foundational data for recommending content for display on the external device.

In a case where the display device 100 performs a mirroring operation for display on the external device, a control command for controlling the display device 100 may be received from the external device. Examples of the control command may include a content change command for changing playback content from first content to second content. In a case where the display device 100 receives the content change command, the display device 100 may play back content resulting from the change. In this case, the display device 100 needs to transmit the content playback information about the content resulting from the change to the content server 300, as information for recommending content for display on the external device.

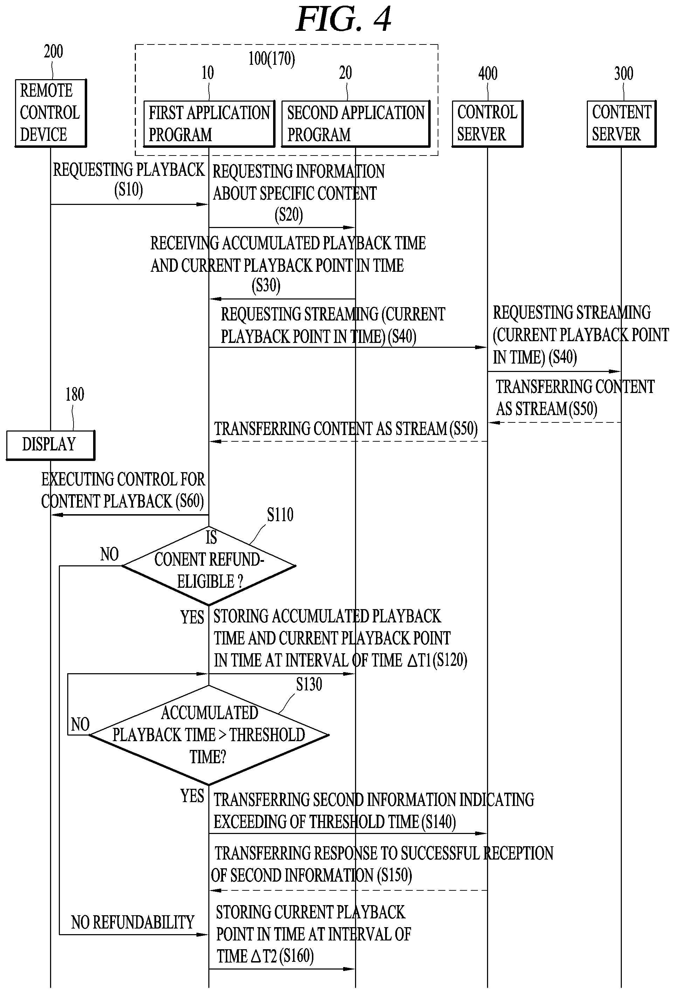

The process of operating a content playback time-based content provision system according to the present disclosure is described below. In this regard, FIG. 4 is a flowchart for the process of operating the content playback time-based content provision system according to the present disclosure. In this regard, one object of the present specification is to provide a display device that controls content playback in conjunction with a server. Another object of the present specification is to provide a display device that controls content playback by determining whether or not a purchased content is refundable, and a control server for managing the content playback. Still another object of the present disclosure is to store or utilize information associated with content refund or playback on an application through which content is individually purchasable, thereby providing a content service. Yet another object of the present disclosure is to provide a content service by utilizing viewing information about each device including a display device instead of a server.

With reference to FIGS. 1 to 4, the content playback time-based content provision system according to the present disclosure is described. In this regard, the content provision system according to the present disclosure may be configured to include the display device 100, the remote control device 200, the content server 300, and a control server 400. The display device 100 may be configured to include the wireless communication unit 173, the processor 170, and the display 180.

The processor 170 may control the display device 100 by executing a user command input through the user input interface 150 or by executing an internal program. The processor 170 may enable an application or an application list, each of which is desired by the user, to be downloaded into the display device 100 by making a connection to a network. The processor 170 may be configured to control the display device 100 by executing at least one application program. By executing the first application program 10, it may be determined, on the basis of the viewing history and playback time for specific content, whether or not such content has been purchased, played back, refunded, resold, or subjected to similar actions. By executing the second application program 20, the information about the playback history and playback time for specific content and other related information may be stored and managed.

The first application program 10 may be configured as an application program that is a software platform, but is not limited thereto. The first application program 10 is changeable depending on the application. The second application program 20 may be configured as webOS that is the operating system of a display device, but is not limited thereto. The second application program 20 is changeable depending on the application.

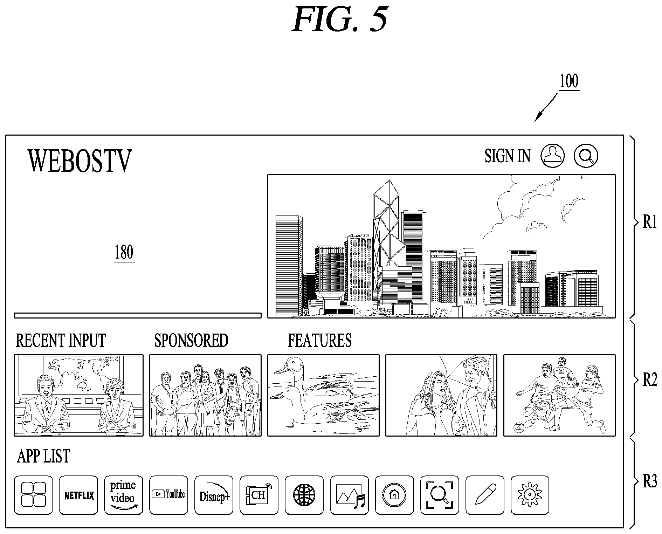

The display 180 may be configured in such a manner that, after a point in time when specific content is played back, the specific content is played back to be displayed thereon. FIG. 5 is a screen that results from executing the second application on the display 180 of the display device 100 in FIG. 1.

With reference to FIG. 5, when the second application program, such as webOS, is executed, a recent image or a representative image may be displayed in a first region R1, which is the upper region of the display 180. Icons, associated with a plurality of application programs, may be displayed in a second region R2 that is under the first region R1 of the display 180. In addition, a plurality of information display windows may be displayed in a second region R2 between the first region R1 and the third region R3 of the display 180. The plurality of information display windows that are displayed in the third region R3 may include a recent input, sponsored content, a TV guide, a home dashboard, and a user guide.

The display device that manages content playback in the content provision system according to the present disclosure is described below with reference to FIGS. 1 to 5. As described above, the display device 100 may be configured to include the wireless communication unit 173, the processor 170, and the display 180.

The wireless communication unit 173 may receive a playback request for specific content from the remote control device 200 (S10). Therefore, the first application program 10 may receive a playback request for specific content, which is transmitted from the remote control device 200, through the wireless communication unit 173 (S10).

Based on the playback request, the processor 170 may acquire a content identifier (ID) of specific content, the previous accumulated playback time for the specific content, and the playback point in time for the specific content. In this regard, the first application program 10 may request information recorded on a device (display device) from the second application program 20 (S20). The second application program 20 may acquire the previous playback time for specific content and the current playback point in time for the specific content and may transfer them to the first application program 10 (S30).

As described above, the processor 170 may be configured to execute the first application program 10 and the second application program 20 that manages the playback history of specific content. When the playback request for specific content is received, the processor 170 may request first information about the specific content from the second application program 20 (S20). The processor 170 may receive from the second application program 20 the first information about the accumulated playback time and the recent playback point in time for the specific content (S30).

When the first information is received from the second application program 20, the processor 170 may transfer a streaming request for specific content to the control server 400 (S40). When transferring the streaming request for specific content, the processor 170 may transfer such a streaming request, with information about the current playback point in time being included therein. When transferring the streaming request for specific content, the processor 170 may transfer such a streaming request, with information about the accumulated playback time being included therein. Accordingly, the control server 400 and the content server 300 may enable the user who logs in through the display device 100 to recognize that specific content is refundable.

The processor 170 may receive specific content from the content server 300 that stores the specific content through the control server 400, starting from a point in time after the recent playback point in time. The processor 170 may control the display 180 in such a manner that specific content received starting from a point in time after the recent playback point in time is displayed on the display 180. In this regard, when the streaming request is received, the content server 300 may transfer specific content, as a stream, to the first application program 10 on the display device 100 through the control server 400 (S50).

Therefore, the content server 300 possibly provides specific content to the display device 100 through a network connection to the control server 400 without a direct connection to the display device 100. Accordingly, the content server 300 may lower the level of network congestion caused by simultaneous connections to a plurality of display devices. The first application program 10 that receives the streaming of specific content may control the display 180 in such a manner that an image in the specific content is played back thereon (S60).

The processor 170 may determine whether or not the purchase of specific content is refundable (S110). When it is determined that the purchase of specific content is refundable, the processor 170 may store the accumulated viewing time and the current playback point in time at a specific interval of time (S120). The first application program 10 may enable the second application program 20 to transfer and store the accumulated playback time and the current playback point in time for specific content at a specific interval of time ΔT1 (for example, one second) (S120).

Since the accumulated playback time and the current playback point in time for specific content are stored, the specific content is refundable when the accumulated playback time is less than or equal to a threshold time. The specific interval of time (ΔT1) is changeable depending on the application, such as the type of specific content, the form of an interface between the first and second application programs, and the level of information transfer congestion.

Before determining whether or not the purchase of specific content is refundable (S110), it may first be determined whether or not specific content is set to be refundable within a threshold time after being purchased. It is first determined whether or not a content program is set to be refundable within a threshold time after being purchased, among content programs providable through the display device 100. It may be determined through a content identifier (contentId) whether or not a content program is set to be refundable within the threshold time after being purchased. When it is determined that a content program is set to be refundable within the threshold time after being purchased, it may also be determined in Step S110 whether or not the accumulated playback time is less than or equal to the threshold time.

When it is determined that the purchase of specific content is refundable, the processor 170 may store the accumulated playback time and the current playback point in time at a specific interval of time through the second application program 20 (S120). Therefore, while specific content is played back, the playback history of specific content may be stored on the device every second. In this regard, the playback history of specific content may include the accumulated playback time and the current playback point in time for specific content. When a specific point in time is reached or a specific condition is satisfied, information associated with the playback of specific content may be transmitted to the control server 400. For example, in association with the accumulated playback time, when a specific point is reached or a specific condition is satisfied, information indicating that specific purchased content is not refund-eligible may be transferred to the control server 400.

After the information indicating that purchased specific content is not refund-eligible is transferred to the control server 400, only the current playback point in time for the specific content may be stored on the device without storing the accumulated playback. When the playback of specific content is stopped, information about the playback pause point in time for specific content and the current playback point in time for specific content is not stored on the device.

A content ID of specific content, the accumulated playback time, and the current playback point in time may be stored at a specific interval of time through the second application program 20 (S120). As in Table 1, the content ID (contentID), the accumulated playback time (accPlayingTime), and the current playback point in time (curPlayingTime) may be stored in a state of being included in the content playback information (contentPlayinfo).

```
           Table 1
           contentPlayInfo: {
             [contentId]: {
                accPlayingTime: 0, // accumulated time (seconds)
                curPlayingtime: 0, // current playback time (seconds)
             }
           }
```

With reference to Table 1, the accumulated playback time (accPlayingTime) and the current playback point in time (curPlayingTime) are set to 0. However, the current playback time may be changed in such a manner as to be incremented by one second every one second. The times during which specific content was previously played back or the times during which specific content was played back on other devices are all accumulated and reflected in the accumulated playback time (accPlayingTime).

The processor 170 may determine through the second application program 20 whether or not the accumulated playback time that is stored exceeds the threshold time (for example, 15 minutes) (S130). The threshold time is not limited to 15 minutes and is changeable depending on the application. For example, the threshold time is changeable depending on a content viewing rating, a content popularity rating, a content image configuration, a rank based on the user's content usage, and similar factors.

When it is determined that the purchase of specific content is not refundable, the processor 170 may store the current playback point in time for the specific content at a specific interval of time (S160). The first application program 10 may enable the second application program 20 to store the current playback point in time for specific content at a specific interval of time (ΔT2) (for example, one second).

The specific interval of time (ΔT2) is changeable depending on the application, such as the type of specific content, the form of the interface between the first and second application programs, and the level of information transfer congestion. When it is determined that specific content is not refundable, the accumulated playback time, which serves as a reference for a refund, is no longer stored, and only the current playback point in time is stored. Consequently, the time required for storage in a memory device that is the storage unit 140 and the time needed to access the memory device can be reduced.

The specific interval of time (ΔT2) at which the current playback point in time is stored (S160) may be the same as or different from the specific interval of time (ΔT1) at which the accumulated playback time and the current playback point in time for specific content are stored (S120). The specific interval of time (ΔT2) at which the current playback point in time is stored (S160) may be set according to a playback option associated with playback from the previous frame when resuming playback after a temporary pause. According to the playback option, the specific interval of time (ΔT2) at which the current playback point in time is stored according to the playback option (S160) may be set to less than one second. Therefore, the specific interval of time (ΔT2) at which the current playback point in time is stored (S160) may be set to less than the specific interval of time (ΔT1) at which the accumulated playback time and the current playback point in time are stored (S120).

When it is determined that the accumulated playback time does not exceed the threshold time, the processor 170 may store the accumulated playback time and the current playback point in time for specific content at a specific interval of time through the second application program 20 (S120). When it is determined that the accumulated playback time exceeds the threshold time, the processor 170 may transfer second information, indicating that the accumulated playback time exceeds the threshold time, to the control server 400. Therefore, the processor 170 may enable the control server 400, which receives the second information indicating that the accumulated playback time exceeds the threshold time, to recognize that the purchase of specific content is not refundable.

The processor 170 may receive from the control server 400 a response indicating that the second information indicating that the accumulated playback time exceeds the threshold time is successfully received (S150). When the response, indicating that the second information is successfully received, is received from the control server 400 (S150), the processor 170 may determine that the purchase of specific content is not refundable. On the basis of the response indicating that the second information is successfully received, the processor 170 may enable the second application program 20 to store the current playback point in time for specific content, which is updated, at a specific interval of time (S160).

In the content provision system according to the present disclosure, content may be provided on the basis of access time alignment in response to a request for a content playback list. Information pieces associated with specific content, which is selected by the user from the content playback list provided on the basis of the access time alignment and is played back, may be stored using different techniques as a result of determining according to the flowchart in FIG. 4 whether or not the specific content is refund-eligible.

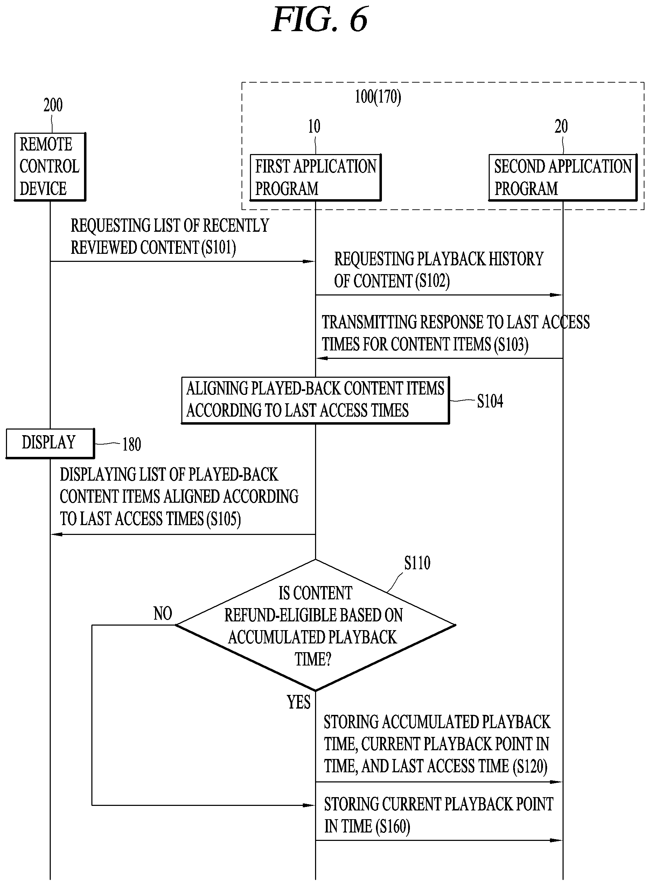

In this regard, FIG. 6 is a flowchart illustrating a content provision method according to the present disclosure, which is based on the access time alignment in response to the request for the content playback list. With reference to FIGS. 1 to 6, the content provision method based on the access time alignment in response to the request for the content playback list and an electronic device 100 that performs the content provision method are described.

The processor 170 may receive a first request for a content list associated with played-back content items, from the remote control device 200 (S101). The processor 170 may transfer a second request for a content playback history to the second application program 20 (S102). The processor 170 may receive a response to the last access times for content items from the second application program 20 (S103). The processor 170 may align played-back content items according to the last access times for the content items (S104). As illustrated in Table 2, the content ID (contentID), the accumulated playback time (accPlayingTime), the current playback point in time (curPlayingTime), and the last access time (lastAccessTime) may be stored in a state of being included in the content playback information (contentPlayinfo). In a response to the request for the content playback history (S102), the content playback information including the last access time (lastAccessTime) may be transferred.

**Table 2**

| |
|---|
| ```
           contentPlayInfo: {
             [contentId]: {
                accPlayingTime: 0, // accumulated time (seconds)
                curPlayingtime: 0, // current playback time (seconds)
          lastAccessTime: 0. // last access time (seconds)
             }
           }
``` |

With reference to Table 2, the accumulated playback time (accPlayingTime), the current playback point in time (curPlayingTime), and the last access time (lastAccessTime) are set to 0. However, the current playback time and the last access time may change in such a manner as to be incremented by one second every one second. The times during which specific content was previously played back or the times during which specific content was played back on other devices are all accumulated and reflected in the accumulated playback time (accPlayingTime).

The processor 170 may display on the display 180 a content list of played-back content items that are aligned in decreasing order of the last access times for content items (S105). When one content item is selected from the content list, the processor 170 may determine on the basis of the accumulated playback time for the selected content item whether or not the selected content item is refund-eligible (S110).

In the process of determining whether or not the selected content item is refundable (S110), the processor 170 may first determine whether or not specific content is set to be refund-eligible within the threshold time after being purchased. It is first determined whether or not a content program is set to be refundable within the threshold time after being purchased, among content programs providable through the display device 100. In this regard, in Step S103, it may be identified, through the response to the last access times for content items, whether or not a content program is set to be refundable within the threshold time after being separately purchased on a per-content basis. It may be determined through a content identifier (contentId) whether or not a content program is set to be refundable within the threshold time after being purchased. When it is determined that a content program is set to be refundable within the threshold time after being purchased, it may be concurrently determined in Step S110 whether the accumulated playback time is less than or equal to the threshold time, or exceeds the threshold time.

When the accumulated playback time for the selected content exceeds the threshold time, the processor 170 may determine that the selected content is refund-eligible. In this regard, depending on the application, Step S110 and Step S130 may be performed separately as illustrated in FIG. 4, or Step S110, corresponding to Steps S110 and S130 as illustrated in FIG. 4, may be performed as illustrated in FIG. 6.

When it is determined that the content selected from the playback list is refund-eligible, the processor 170 may transfer the accumulated playback time, the current playback time, and the last access time to the second application program 20 and may store them (S120). When it is determined that the content selected from the playback list is not refund-eligible, the processor 170 may transfer the current playback time to the second application program 20 at a specific interval of time and may store it (S160).

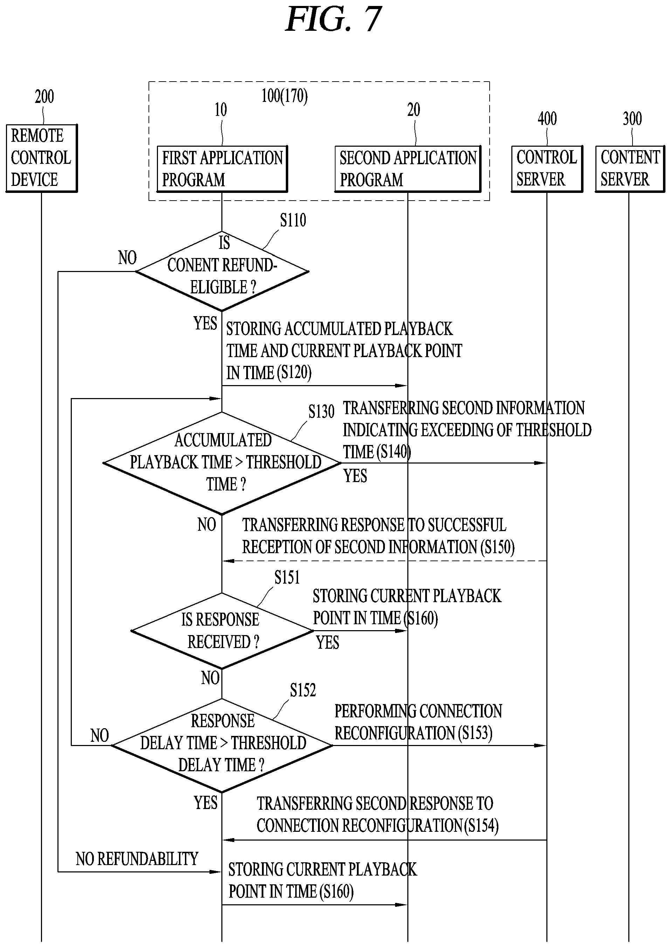

When the response indicating that the second information is received is not received from the control server 400, the processor 170 needs to re-determine whether or not the purchase of specific content is refundable. In this regard, FIG. 7 is a flowchart illustrating the process of operating a content playback time-based content provision system according to an embodiment of the present disclosure.

With reference to FIGS. 1 to 7, the processor 170 may determine whether or not the response indicating that the second information is received is received from the control server 400 (S151). When the response indicating that the second information is successfully received is received, the processor 170 may enable the second application program 20 to store the current playback point in time for specific content, which is updated, at a specific interval of time (S160). When the response indicating that the second information is successfully received is not received, the processor 170 may perform connection reconfiguration for a connection to the control server 400 according to a response delay time or the number of times that the response fails to be received (S153). The response delay time may be defined as a predetermined time that elapses after the scheduled time for the response from the response, following the transfer of the second information indicating that the accumulated playback time exceeds the threshold time.

In this regard, since the second information indicating that the accumulated playback time exceeds the threshold time is transferred, it may be determined whether or not the response delay time for the response indicating that the second information is successfully received is greater than or equal to a threshold delay time (S152). It may also be determined whether or not the number of failures to receive the response indicating that the second information is successfully received is greater than or equal to a threshold number of times (S152). In this regard, the response delay time for the response indicating that the second information is successfully received and the number of times that the response fails to be received may be measured. When it is determined that the response delay time is greater than or equal to the threshold delay time or that the number of times that the response fails to be received is greater than or equal to the threshold number of times (S152), the processor 170 may perform connection reconfiguration for the connection to the control server 400 (S153). Therefore, the display device 100 possibly performs connection reconfiguration for the connection to the control server 400 within a short time without performing connection reconfiguration for a connection to the content server 300. In addition, the level of network congestion caused by frequent connection reconfiguration for the connection to the content server 300 may be lowered.

The response delay time may be preset on the control server 400 or may be set on the control server 400 in a manner that varies according to the number of users accessing the control server 400, the content type, and other relevant conditions. When the total number of users accessing the control server 400 and users attempting to access the control server 400 exceeds a first threshold value, the processor 170 may execute control in a manner that reduces a threshold time for the response delay time. Accordingly, when the response is not received within the reduced threshold time, connection reconfiguration may be performed (S153), thereby possibly improving the network safety.

When the total number of users accessing the control server 400 and users attempting to access the control server 400 exceeds the first threshold value and the response is not received within the reduced threshold time, the processor 170 may perform connection reconfiguration for a connection to a second control server that is another control server (S153). The level of network congestion is lower because the number of users accessing the second control server is less than the number of users accessing the control server 400. The control server 400 and the second control server may be managed by the same manufacturer that manufactures the display device 100 and may perform content playback, recommendation, and management.

Conversely, when the total number of users accessing the control server 400 and users attempting to access the control server 400 is reduced and thus the level of network congestion is reduced, connection reconfiguration for a connection back to the control server may be performed. When the total number of users accessing the control server 400 and users attempting to access the control server 400 does not reach a second threshold value that is lower than the first threshold value, the processor 170 may perform connection reconfiguration for the connection back to the control server. In this regard, the control server 400 and the second control server may maintain connections to the content server 300 and a second content server, respectively, both of which provide the same content. Therefore, specific content is viewable in a stable network state through the display device 100, and an alert that a refund eligibility period has expired is possibly transferred to the control servers. After connection reconfiguration for the connection to the second control server is performed, specific content may be continuously received by the display device 100 through the second control server. Therefore, the user can be provided with support functions, such as a specific content preview and post-purchase refund eligibility, and can view high-quality content by lowering the level of network congestion on the content server 300 and the control server 400.

When connection reconfiguration for a connection between the display device 100 and the control server 400 is performed, the control server 400 may transfer a second response, indicating that the connection reconfiguration is successfully performed, to the processor 170 (S154). When the second response, indicating that the connection reconfiguration is successfully performed, is received, the processor 170 may re-determine whether or not the accumulated playback time exceeds the threshold time (for example, 15 minutes) (S130). In this regard, the accumulated playback time for specific content may be stored through the second application program 20.

In a state where the connection reconfiguration is performed, when the accumulated playback time exceeds the threshold time, the processor 170 may transfer the second information indicating that the accumulated playback time exceeds the threshold time to the control server 400 (S140). In this regard, when viewing is performed for a specific time or longer as a result of accumulating the playback times on a per-device basis without operating in conjunction with the server, the viewing history may be provided to the control server 400. When the user plays back specific content, the specific content is stored on the device every second. When the time for which the specific content is stored is longer than or equal to N minutes (for example, 15 minutes), the time for which the specific content is stored is transmitted to the control server 400, thereby transferring information associated with whether or not a refund is available. In addition, when the user plays back specific content on a player like the display device 100, the specific content may resume playback from the most recent playback point in time through the viewing information stored on the device.

Accordingly, the processor 170 may receive from the control server 400 the response indicating that the second information, indicating that the accumulated playback time exceeds the threshold time, is successfully received (S150). On the basis of the response indicating that the second information, indicating that the accumulated playback time exceeds the threshold time, is received, the processor 170 may enable the second application program 10 to store the current playback point in time, which is updated, at a specific interval of time.

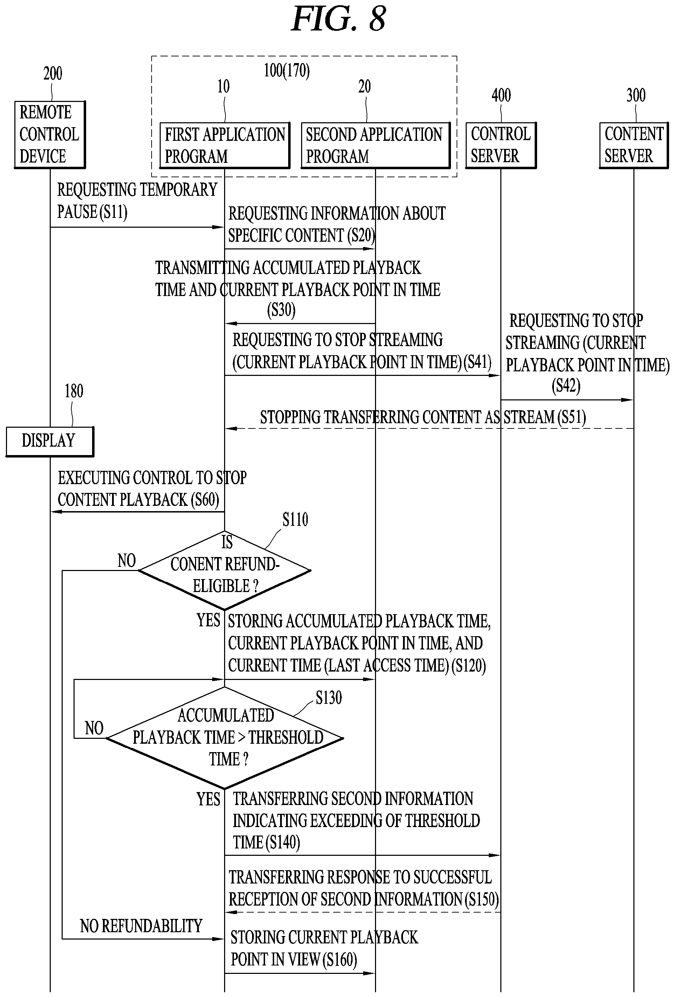

In the content provision system according to the present disclosure, the display device that controls content playback may store another parameter in response to a temporary pause request, and adaptive control is possibly executed according to the temporary pause. In this regard, FIG. 8 is a flowchart illustrating how the content provision system according to the embodiment of the present disclosure stores another parameter in response to the temporary pause request and executes the adaptive control.

With reference to FIGS. 1 to 8, the display device that displays content display in the content provision system is described. The processor 170 of the display device 100 may receive from the remote control device 200 a request (S11) to temporarily pause the playback of specific content. When the request (S11) to temporarily pause the playback of the specific content is received, the processor 170 may request information about the specific content from the second application program 20 (S20). The processor 170 may receive information about the accumulated playback time and the current playback point in time for the specific content from the second application program 20 (S30).

When the information about the specific content is received from the second application program 20, the processor 170 may transfer a request to stop streaming the specific content to the control server 400 (S41). When transferring the request to stop streaming specific content, the processor 170 may transfer such a request, with the information about the current playback point in time being included therein. When transferring the request to stop streaming specific content, the processor 170 may transfer such a request, with the information about the accumulated playback time being included thereon. Accordingly, the control server 400 and the content server 300 may enable the user who logs in through the display device 100 to recognize that specific content is refundable. The control server 400 may transfer the request to temporarily stop streaming specific content to the content server 400 that stores the specific content (S42).

The specific content may stop being transferred from the content server 300, starting from a point in time after the current time. The processor 170 may control the display 180 in such a manner that the received specific content stops being played back on the display 180, starting from a point in time after the current playback point in time. In this manner, when the request to stop streaming specific content is received, the content server 300 may stop transferring the specific content, as a stream, to the first application program 10 through the control server 400 (S51). Therefore, it is possible that the content server 300 temporarily stops providing specific content to the display device 100 through the network connection to the control server 400, without a direct connection to the display device 100. Accordingly, the content server 300 may lower the level of network congestion caused by simultaneous connections to the plurality of display devices. The first application program 10, which stops receiving specific content as a stream, may control the display 180 in such a manner that the playback of an image in the specific content is stopped (S60).

In a state where the playback of specific content is temporarily paused, the processor 170 may determine whether or not the purchase of the specific content is refundable (S110). When it is determined that the purchase of specific content is refundable, the processor 170 may store the accumulated viewing time, the current playback point in time, and the current time (or the last access time) at a specific interval of time (S120). The first application program 10 may enable the second application program 20 to store the current playback point in time and the current time (or the last access time) for specific content.

Since the accumulated playback time and the current time (or the last access time) are stored along with the current playback point in time for specific content, the specific content is refundable when the playback time for the specific content is less than or equal to the threshold time. A specific interval of time is changeable depending on the application, such as the type of specific content, the form of the interface between the first and second application programs, and the level of information transfer congestion.

When it is determined that the purchase of specific content is not refundable, the processor 170 may store the current playback point in time for the specific content at a specific interval of time (S160). The first application program 10 may enable the second application program 20 to store the current playback point in time for specific content. When it is determined that specific content is not refundable, the accumulated playback time, which serves as a reference for a refund, is no longer stored, and only the current playback point in time is stored. Consequently, the time required for storage in a memory device that is the storage unit 140 and the time needed to access the memory device can be reduced.

When it is determined that the purchase of specific content is refundable, the processor 170 may store the accumulated viewing time, the current playback point in time, and the current time (or the last access time) for specific content through the second application program 20 (S120). The processor 170 may determine through the second application program 20 whether or not the accumulated playback time that is stored exceeds the threshold time (for example, 15 minutes) (S130). The threshold time is not limited to 15 minutes and is changeable depending on the application. For example, the threshold time is changeable depending on the content viewing rating, the content popularity rating, the content image configuration, the rank based on the user's content usage, and similar factors.

In a state where the playback of specific content is temporarily paused, it may be determined whether or not the accumulated playback time for specific content that is refundable exceeds the threshold time (S130). When it is determined that the accumulated playback time for specific content that is refundable does not exceed the threshold, the processor 170 may store the accumulated viewing time, the current playback point in time, and the current time (or the last access time) for the specific content through the second application program 20 (S120). When it is determined that the accumulated playback time exceeds the threshold time, the processor 170 may transfer the second information indicating that the accumulated playback time exceeds the threshold time to the control server 400 (S140). Therefore, the processor 170 may enable the control server 400, which receives the second information indicating that the accumulated playback time exceeds the threshold time, to recognize that the purchase of specific content is not refundable.

The processor 170 may receive from the control server 400 a response indicating that the second information indicating that the accumulated playback time exceeds the threshold time is successfully received (S150). When the response, indicating that the second information is successfully received, is received from the control server 400 (S150), the processor 170 may determine that the purchase of specific content is not refundable. On the basis of the response indicating that the second information is successfully received, the processor 170 may enable the second application program 20 to store the current playback point in time for specific content, which is updated, at a specific interval of time (S160).

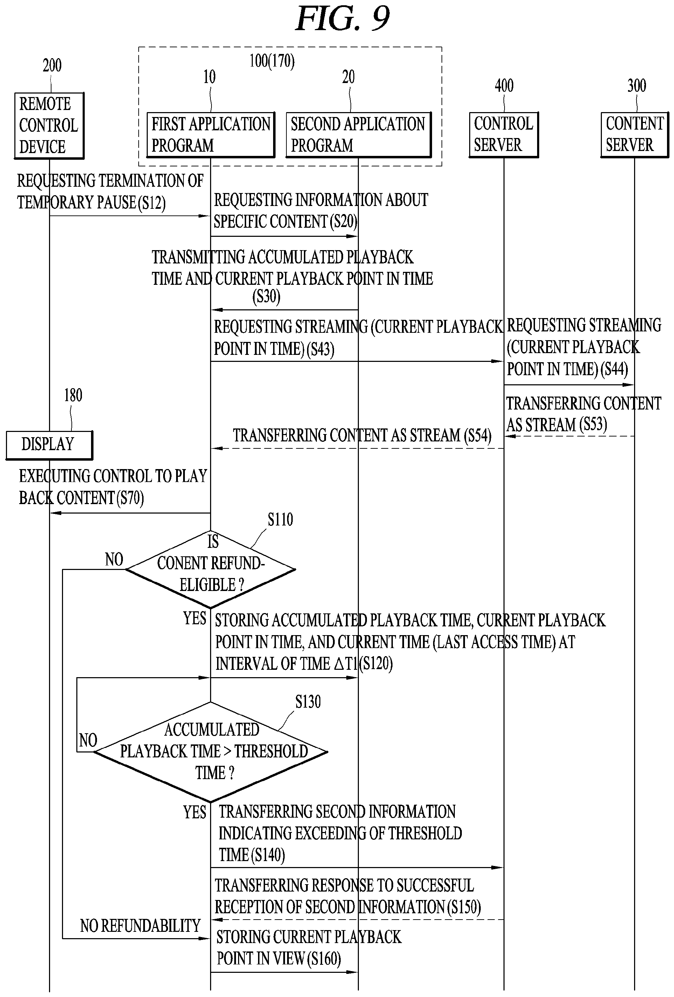

In the content provision system according to the present disclosure, the display device that controls content playback stores another parameter in response to a request to terminate a temporary pause, and the adaptive control is possibly executed. In this regard, FIG. 9 is a flowchart illustrating how the content provision system according to the embodiment of the present disclosure stores another parameter in response to the request to terminate a temporary pause and executes the adaptive control.

With reference to FIGS. 1 to 9, the display device that controls content playback in the content provision system is described. The processor 170 of the display device 100 may receive from the remote control device 200 the request (S12) to terminate a temporary pause of the playback of specific content. When the request (S12) to terminate a temporary pause of the playback of specific content is received, the processor 170 may request the information on the specific content from the second application program 20 (S20). The processor 170 may receive the information about the accumulated playback time and the current playback point in time for the specific content from the second application program 20 (S30).

When the information about the specific content is received from the second application program 20 is received, the processor 170 may transfer the streaming request for specific content to the control server 400 (S43). The streaming request for specific content may be a request to terminate a temporary pause of streaming. When transferring the streaming request for specific content, the processor 170 may transfer such a streaming request, with the information about the current playback point in time being included therein. When transferring the streaming request for specific content, the processor 170 may transfer such a streaming request, with the information about the accumulated playback time being included therein. Accordingly, the control server 400 and the content server 300 may enable the user who logs in through the display device 100 to recognize that specific content is refundable. The control server 400 may transfer the streaming request for specific content to the content server 400 that stores specific content (S44).

The transfer (or playback) of specific content from the content server 300 may be no longer stopped, starting from the current time. The processor 170 may control the display 180 in such a manner that specific content received starting with a point in time after the current point in time is played back on the display 180. In this regard, when the streaming request is received, the content server 300 may transfer specific content, as a stream, to the first application program 10 through the control server 400 (S51). Therefore, the content server 300 possibly provides specific content to the display device 100 through a network connection to the control server 400 without a direct connection to the display device 100. Accordingly, the content server 300 may lower the level of network congestion caused by simultaneous connections to a plurality of display devices. The first application program 10 that resumes reception of specific content, as a stream, after a temporary pause may control the display 180 in such a manner that an image in specific content is displayed thereon (S70).

In a state where a temporary cause of the playback of specific content is terminated, the processor 170 may determine whether or not the purchase of the specific content is refundable (S110). When it is determined that the purchase of specific content is refundable, the processor 170 may store the accumulated viewing time, the current playback point in time, and the current time (or the last access time) at a specific interval of time (S120). The first application program 10 may enable the second application program 20 to store the current playback point in time and the current time (or the last access time) for specific content at a specific interval of time (for example, one second).

Since the accumulated playback time and the current time (or the last access time) are stored along with the current playback point in time for specific content, the specific content is refundable when the playback time for the specific content is less than or equal to the threshold time. A specific interval of time is changeable depending on the application, such as the type of specific content, the form of the interface between the first and second application programs, and the level of information transfer congestion.

In the state where a temporal pause of the playback of specific content is terminated, when it is determined that the purchase of the specific content is not refundable, the processor 170 may store the current playback point in time for the specific content at a specific interval of time (S160). The first application program 10 may enable the second application program 20 to store the current playback point in time for specific content at a specific interval of time (for example, one second). A specific interval of time is changeable depending on the application, such as the type of specific content, the form of the interface between the first and second application programs, and the level of information transfer congestion. When it is determined that specific content is not refundable, the accumulated playback time, which serves as the reference for a refund, is no longer stored, and only the current playback point in time is stored. Consequently, the time required for storage in a memory device that is the storage unit 140 and the time needed to access the memory device can be reduced.

In the state where a temporal pause of the playback of specific content is terminated, when it is determined that the purchase of the specific content is refundable, the processor 170 may store the accumulated playback time, the current playback point in time, and the current time (or the last access time) for the specific content at a specific interval of time through the second application program 20 (S120). The processor 170 may determine through the second application program 20 whether or not the accumulated playback time that is stored exceeds the threshold time (for example, 15 minutes) (S130). The threshold time is not limited to 15 minutes and is changeable depending on the application. For example, the threshold time is changeable depending on the content viewing rating, the content popularity rating, the content image configuration, the rank based on the user's content usage, and similar factors.

In the state where a temporal pause of the playback of specific content is terminated, it may be determined whether or not the accumulated playback time for the specific content that is refundable exceeds the threshold time (S130). When it is determined that the accumulated playback time does not exceed the threshold time, the processor 170 may store the accumulated playback time, the current playback point in time, and the current time (or the last access time) for specific time at a specific interval of time through the second application program 20 (S120). When it is determined that the accumulated playback time exceeds the threshold time, the processor 170 may transfer the second information indicating that the accumulated playback time exceeds the threshold time to the control server 400 (S140). Therefore, the processor 170 may enable the control server 400, which receives the second information indicating that the accumulated playback time exceeds the threshold time, to recognize that the purchase of specific content is not refundable.

The processor 170 may receive from the control server 400 a response indicating that the second information indicating that the accumulated playback time exceeds the threshold time is successfully received (S150). When the response, indicating that the second information is successfully received, is received from the control server 400 (S150), the processor 170 may determine that the purchase of specific content is not refundable. On the basis of the response indicating that the second information is successfully received, the processor 170 may enable the second application program 20 to store the current playback point in time for specific content, which is updated, at a specific interval of time (S160).

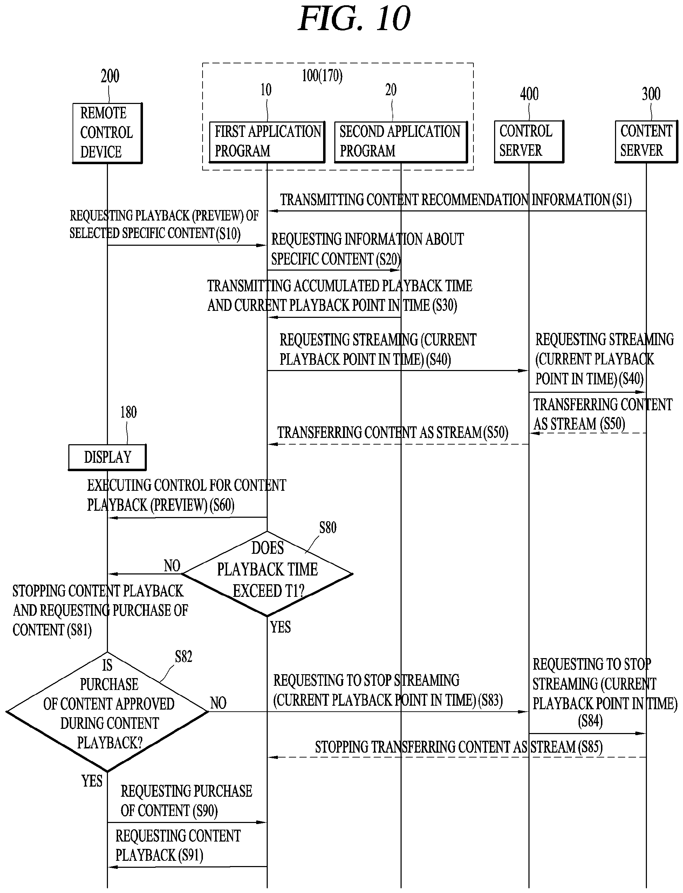

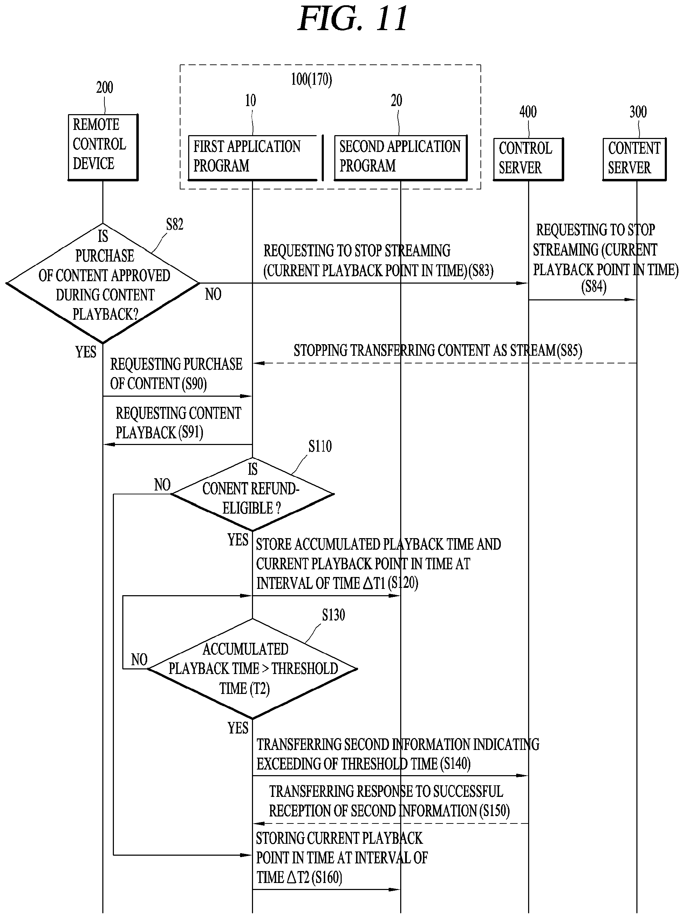

The display device that plays back specific content in the content provision system according to the present disclosure may be configured in such a manner that content is selected based on the content recommendation information and that the purchase of the selected content is approved when a predetermined time elapses. In this regard, the display device may be configured in such a manner that, even though content is purchased after a predetermined time elapses, the purchase of the content is refundable before the threshold time. FIGS. 10 and 11 are flowcharts for a method of controlling content playback according to an embodiment of the present disclosure, the method being associated with content playback and refund and depending on whether or not the purchase of content is approved. FIG. 10 is a flowchart for a method of pausing and controlling content playback, the method depending on whether or not the purchase of specific content selected from a recommended content list is approved. FIG. 11 is a flowchart for a method of controlling content playback, the method depending on whether or not content is purchased during playback and refund-eligible during playback.

With reference to FIGS. 1 to 11, the operation of the display device that controls content purchasing and playback in the content provision system according to the content provision system is described. The display device 100 may receive the content recommendation information from the content server 300 through the control server 400 (S1). The display device 100 may receive a specific content playback request from the content list, which varies according to the content recommendation information, through the remote control device 200 or the display 180.

The display device 100 may receive the playback request for specific content from the remote control device 200 (S10). In this regard, the playback request for specific content may be a request for a preview of specific content. Therefore, the first application program 10 may receive the playback request for specific content (the request for a preview of specific content), which is transmitted from the remote control device 200, through the remote control device 200 (S10).

The display device 100 may determine whether or not the playback time, which is based on the current playback point in time at which specific content is played back, exceeds a first threshold time T1. In this regard, one device, such as the display device 100, may determine whether or not the playback time, which is based on the current playback point in time at which specific content is played back, exceeds the first threshold time T1. In this regard, the first application program 10 may determine whether or not the playback time exceeds the first threshold time T1 associated with a preview of specific content.

The first threshold time T1 for confirming the purchase of specific content may be set to be shorter than a threshold time T2 for refunding purchased specific content. The first threshold time for confirming the purchase of specific content may be set to one or three minutes, but is not limited thereto. The first threshold time may vary on a per-content basis. For example, a point in time at which a preview of a specific content program is ended may be set to the first threshold time T1 for confirming the purchase of specific content. When the playback time exceeds the first threshold time T1, the processor 170 may display on the display 180 a dialog box for asking whether or not the purchase of specific content being played back is approved. When the dialog box for asking whether or not the purchase of specific content is approved is displayed on the display 180, the playback of the specific content is stopped.

When the first threshold time T1 for confirming the purchase of specific content is exceeded during the playback of the specific content, the processor 170 may control the display 180 in such a manner that the playback of the specific content is stopped (S81). When the playback of specific content is paused (S81), the processor 170 may control the display 180 in such a manner that the dialog box for asking whether or not the purchase of the specific content is approved is displayed on the display 180. In this regard, the processor 170 may transfer a content purchase requesting message requesting the purchase of specific content, in such a manner to be displayed on the display 180. In addition, when the first threshold time T1 is exceeded, it may be determined whether or not a content purchase request approving the purchase of specific content is received (S82).

In a case where the content purchase request approving the purchase of specific content is not received, the processor 170 may control the display 180 in such a manner that the playback of specific content is stopped or remains stopped. In addition, in a case where the content purchase request is not received, the processor 170 may transfer the request to stop streaming, to the control server 400 (S83). In the case where the content purchase request is not received, the processor 170 may transfer the request to stop streaming, to the content server 300 through the control server 400 (S84). Therefore, the content server 300 may stop streaming a specific content to the display device 100 through the control server 400 (S85).

The processor 170 may receive the content purchase request approving the purchase of specific content through the remote control device 200 or the display 180 (S90). In a case where the content purchase request approving the purchase of specific content is received, the processor 170 may execute control in such a manner that specific content is played back, starting with a point in time after the first threshold time T1 (S91). The processor 170 may store the accumulated playback time and the current playback point in time for specific content at a specific interval of time. The processor 170 may determine whether or not the accumulated playback time exceeds the threshold time T2 (S130). When it is determined that the accumulated playback time exceeds the threshold time T2, the processor 170 may transfer to the control server 400 the second information indicating that the accumulated playback time exceeds the threshold time T2. The processor 170 that receives from the control server 400 the response indicating that the second information is successively received may determine that specific content is not refundable. The processor 170 that receives the response indicating that the second information is successfully received may store the current playback point in time at a specific interval of time (S160).

The display device according to the present disclosure that controls content playback is described above. The technical effects of the display device according to the present disclosure that controls content playback may be summarized as follows. However, the present disclosure is not limited to this summarization.

According to the present disclosure, there can be provided a display device that controls content playback in conjunction with a server.

According to the present disclosure, there can be provided a display device, which determines whether or not purchased content is refundable and then controls content playback, and a control server that manages the display device.

According to the present disclosure, a content service can be provided by storing and utilizing related information associated with a content refund and content playback on an application through which content is purchasable individually.

According to the present disclosure, a content service can be provided by utilizing viewing information on the basis of each of the devices, examples of which include a display device instead of a server.

According to the present disclosure, network traffic can be reduced by transferring a result to a server only at a specific point in time without periodically communicating with the server.

According to the present disclosure, when a user resumes playback of content at a later time, the user can view the content, starting from where the user last stopped viewing it on another device.

The present disclosure can be implemented as computer-readable codes in a program-recorded medium. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The computer may also include the control unit 180 of the terminal. Therefore, the detailed description should not be limitedly construed in all of the aspects, and should be understood to be illustrative. The scope of the disclosure should be determined by reasonable interpretation of the appended claims, and all changes within the equivalent scope of the disclosure are embraced by the appended claims.

## Claims

1. A display device (100) that controls content playback, the display device (100) comprising:
a user input interface (150) through which a playback request for specific content is received from a remote control device (200);
a processor (170) that acquires a content identifier (ID) for the specific content, the previous accumulated playback time for the specific content, and the playback point in time for the specific content based on the playback request; and
a display (180) that is configured in such a manner that the specific content is displayed on the display (180),
wherein the processor (170) determines whether or not the purchase of the specific content is refundable,
wherein, when it is determined that the purchase of the specific content is refundable, the processor (170) stores the accumulated playback time and the current playback point in time at a specific interval of time, and
wherein, when it is determined that the purchase of the specific content is not refundable, the processor (170) stores the current playback point in time at a specific interval of time.

2. The display device (100) of claim 1, wherein the processor (170) executes a first application program (10) and a second application program (20) that manages the playback history of the specific content,
wherein, when the playback request for the specific content is received, the processor (170) requests information about the specific content from the second application program (20), and receives the information about the specific content, which includes the accumulated playback time and the current time, from the second application program (20).

3. The display device (100) of claim 2, wherein, when the information about the specific content is received from the second application program (20), the processor (170) transfers a request to stream the specific content to a control server (400), and the control server (400) transfers the request to stream the specific content to a content server (300) that stores the specific content.

4. The display device (100) of claim 2, wherein, when the playback request is received, the processor (170) requests first information about the specific content from the second application program (20), and receives the first information about the specific content, which includes the accumulated playback time and the current playback point in time, from the second application program (20).

5. The display device (100) of claim 4, wherein, when the first information about the specific content is received from the second application program (20), the processor transfers a request to stream the specific content to the control server (400), receives the specific content from the content server (300) that stores the specific content, starting from a point in time after the current playback point in time, through the control server (400), and controls the display (180) in such a manner that the received specific content is played back on the display (180), starting from a point in time after the current playback point in time.

6. The display device (100) of claim 5, wherein, when it is determined that the purchase of the specific content is refundable, the processor (170) stores the accumulated playback time and the current playback point in time through the second application program (20), and determines whether or not the stored accumulated playback time exceeds a threshold time, and
wherein, when it is determined that the accumulated playback time exceeds the threshold time, the processor (170) transfers second information indicating that the accumulated playback time exceeds the threshold time, to the control server (400).

7. The display device (100) of claim 6, wherein, when a response indicating that the second information is received is received from the control server (400), the processor (170) determines that the purchase of the specific content is not refundable, and, on the basis of the response indicating that the second information is received, enables the second application program (20) to store the current playback point in time that is updated at a specific interval of time.

8. The display device (100) of claim 7, wherein, when the total number of users accessing the control server (400) and users attempting to access the control server (400) exceeds a first threshold value, the processor (170) executes control in a manner that reduces a threshold time for a response delay time,
wherein, when the total number of users accessing the control server (400) and users attempting to access the control server (400) exceeds the first threshold value and the response is not received within the reduced threshold time, the processor (170) performs connection reconfiguration for a connection to a second control server,
wherein, when the total number of users accessing the control server (400) and users attempting to access the control server (400) does not reach a second threshold value that is lower than the first threshold value, the processor (170) performs connection reconfiguration for a connection back to the control server (400), and
wherein, when a second response indicating that the connection reconfiguration is successfully performed is received, the processor (170) redetermines through the second application program (20) whether or not the stored accumulated playback time exceeds the threshold time.

9. The display device (100) of claim 8, wherein, in a state where the connection reconfiguration is performed, the processor (170) transfers the second information indicating that the accumulated playback time exceeds the threshold time, to the control server (400), receives a response indicating that the second information indicating that the accumulated playback time exceeds the threshold time is successfully received, from the control server (400), and, on the basis of the response indicating that the second information is received, enables the second application program (20) to store the current playback point in time that is updated at the specific interval of time.

10. The display device (100) of any one of claims 7 to 9, wherein the processor (170) receives a first request for a content list associated with played-back content items, from the remote control device (200), transfers a second request for a content playback history to the second application program (20), receives a response to the last access times for content items from the second application program (20), and aligns the played-back content items according to the last access times.

11. The display device (100) of claim 10, wherein the processor (170) displays on the display (180) the content list of the played-back content items aligned in decreasing order of the last access time,
wherein, when one content item is selected from the content list, the processor (170) determines on the basis of the accumulated playback time for the selected content whether or not the selected content is refund-eligible, and preferably
wherein, when the selected content is refund-eligible, the processor (170) stores the accumulated playback, the current playback time, and the last access time at an interval of time, and
wherein, when it is determined that the selected content is not refund-eligible, the processor (170) stores the current playback time at a specific interval of time.

12. The display device (100) of any one of claims 3 to 11, wherein the processor (170) receives a request to temporarily pause specific content from the remote control device (200), receives the accumulated playback time and the current playback point in time for the specific content from the second application program (20), transfers a request to stop streaming the specific content, with information about the accumulated playback time being included in the request, and determines, in a state where the playback of the specific content is temporarily paused, whether or not the purchase of the specific content is refundable, and preferably
wherein, in the state where the playback of the specific content is temporarily paused, when it is determined that the purchase of the specific content is refundable, the processor (170) stores the accumulated viewing time, the current playback point in time, and the last access time,
wherein, in the state where the playback of the specific content is temporarily paused, when it is determined that the purchase of the specific content is not refundable, the processor (170) stores the current playback point in time for the specific content, and
wherein, in the state where the playback of the specific content is temporarily paused, when it is determined that the accumulated playback time for the specific content, the purchase of which is refundable, does not exceed a threshold time, the processor (170) stores the accumulated playback time, the current playback point in time, and the last access time for the specific content.

13. The display device (100) of any one of claims 3 to 12, wherein the processor (170) receives a request to temporarily pause specific content from the remote control device (200), receives the accumulated playback time and the current playback point in time for the specific content from the second application program (20), transfers a request to stream the specific content, with information about the accumulated playback time being included in the request, and determines, in a state where a temporary pause of the playback of the specific content is terminated, whether or not the purchase of the specific content is refundable, and preferably
wherein, in the state where a temporary pause of the playback of the specific content is terminated, when it is determined that the purchase of the specific content is refundable, the processor (170) stores the accumulated viewing time, the current playback point in time, and the last access time at a specific interval of time,
wherein, in the state where a temporary pause of the playback of the specific content is terminated, when it is determined that the purchase of the specific content is not refundable, the processor (170) stores the current playback point in time for the specific content at the specific interval of time, and
wherein, in the state where a temporary pause of the playback of the specific content is terminated, when it is determined that the accumulated playback time for the specific content, the purchase of which is refundable, does not a threshold time, the processor (170) stores the accumulated playback time, the current playback point in time, and the last access time for the specific content at the specific interval of time.

14. The display device (100) of any one of claims 6 to 13, wherein the processor (170) receives content recommendation information from the content server (300) through the control server (400), receives a specific content playback request from a content list, which varies according to the content recommendation information, determines whether or not a playback time based on the current playback point in time at which the specific content is played back in the display device (100) exceeds a first threshold time, and, when the playback time exceeds the first threshold time, displays on the display (180) a dialog box for asking whether or not the purchase of the played-back specific content is approved.

15. The display device (100) of claim 14, wherein, in a case where a content purchase request to approve the purchase of the specific content is not received, the processor (170) controls the display (180) in such a manner that the playback of the specific content is stopped, transfers a request to stop streaming the specific content to the content server (300) through the control server (400),
wherein, in the case where a content purchase request to approve the purchase of the specific content is received, the processor (170) controls the display in such a manner that the specific content is played back starting from a point in time after the first threshold time and stores the accumulated playback time and the current playback point in time for the specific content at the specific interval of time, and
wherein, when it is determined that the accumulated playback time exceeds the threshold time, the processor (170) transfers second information indicating that the accumulated playback time exceeds the threshold time, to the control server (400).

## Amended claims

### Amended claims in accordance with Rule 137(2) EPC.

1. A display device (100) that controls content playback, the display device (100) comprising:
a user input interface (150) configured that through it a playback request for specific content is received from a remote control device (200);
a processor (170) that is configured to acquire a content identifier, ID, for the specific content,
the previous accumulated playback time for the specific content, and the playback point in time for the specific content based on the playback request; and
a display (180) that is configured in such a manner that the specific content is displayed on the display (180),
wherein the processor (170) is configured to determine whether or not a purchase of the specific content is refundable,
wherein, when it is determined that the purchase of the specific content is refundable, the processor (170) is configured to store the accumulated playback time and the current playback point in time at a specific interval of time, and
wherein, when it is determined that the purchase of the specific content is not refundable, the processor (170) is configured to store the current playback point in time at a specific interval of time and to not store the accumulated playback time.

2. The display device (100) of claim 1, wherein the processor (170) is configured to execute a first application program (10) and a second application program (20) that manages the playback history of the specific content,
wherein, when the playback request for the specific content is received, the processor (170) is configured to request information about the specific content from the second application program (20), and receive the information about the specific content, which includes the accumulated playback time and the current time, from the second application program (20).

3. The display device (100) of claim 2, wherein, when the information about the specific content is received from the second application program (20), the processor (170) is configured to transfer a request to stream the specific content to a control server (400), and the control server (400) is configured to transfer the request to stream the specific content to a content server (300) that stores the specific content.

4. The display device (100) of claim 2, wherein, when the playback request is received, the processor (170) is configured to request first information about the specific content from the second application program (20), and receive the first information about the specific content, which includes the accumulated playback time and the current playback point in time, from the second application program (20).

5. The display device (100) of claim 4, wherein, when the first information about the specific content is received from the second application program (20), the processor is configured to transfer a request to stream the specific content to the control server (400), receive the specific content from the content server (300) that stores the specific content, starting from a point in time after the current playback point in time, through the control server (400), and control the display (180) in such a manner that the received specific content is played back on the display (180), starting from a point in time after the current playback point in time.

6. The display device (100) of claim 5, wherein, when it is determined that the purchase of the specific content is refundable, the processor (170) is configured to store the accumulated playback time and the current playback point in time through the second application program (20), and determine whether or not the stored accumulated playback time exceeds a threshold time, and
wherein, when it is determined that the accumulated playback time exceeds the threshold time, the processor (170) is configured to transfer second information indicating that the accumulated playback time exceeds the threshold time, to the control server (400).

7. The display device (100) of claim 6, wherein, when a response indicating that the second information is received is received from the control server (400), the processor (170) is configured to determine that the purchase of the specific content is not refundable, and, on the basis of the response indicating that the second information is received, enable the second application program (20) to store the current playback point in time that is updated at a specific interval of time.

8. The display device (100) of claim 7, wherein the processor (170) is configured to receive a first request for a content list associated with played-back content items, from the remote control device (200), transfer a second request for a content playback history to the second application program (20), receive a response to the last access times for content items from the second application program (20), and align the played-back content items according to the last access times.

9. The display device (100) of claim 8, wherein the processor (170) is configured to display on the display (180) the content list of the played-back content items aligned in decreasing order of the last access time,
wherein, when one content item is selected from the content list, the processor (170) is configured to determine on the basis of the accumulated playback time for the selected content whether or not the selected content is refund-eligible.

10. The display device (100) of claim 9, wherein, when the selected content is refund-eligible, the processor (170) is configured to store the accumulated playback, the current playback time, and the last access time at an interval of time, and
wherein, when it is determined that the selected content is not refund-eligible, the processor (170) is configured to store the current playback time at a specific interval of time.10.

11. The display device (100) of any one of claims 3 to 9, wherein the processor (170) is configured to receive a request to temporarily pause specific content from the remote control device (200), receive the accumulated playback time and the current playback point in time for the specific content from the second application program (20), transfer a request to stop streaming the specific content, with information about the accumulated playback time being included in the request, and determine, in a state where the playback of the specific content is temporarily paused, whether or not the purchase of the specific content is refundable.

12. The display device (100) of claim 11, wherein, in the state where the playback of the specific content is temporarily paused, when it is determined that the purchase of the specific content is refundable, the processor (170) is configured to store the accumulated viewing time, the current playback point in time, and the last access time,
wherein, in the state where the playback of the specific content is temporarily paused, when it is determined that the purchase of the specific content is not refundable, the processor (170) is configured to store the current playback point in time for the specific content, and
wherein, in the state where the playback of the specific content is temporarily paused, when it is determined that the accumulated playback time for the specific content, the purchase of which is refundable, does not exceed a threshold time, the processor (170) is configured to store the accumulated playback time, the current playback point in time, and the last access time for the specific content.

13. The display device (100) of any one of claims 3 to 9 or claim 11, wherein the processor (170) is configured to receive a request to temporarily pause specific content from the remote control device (200), receive the accumulated playback time and the current playback point in time for the specific content from the second application program (20), transfer a request to stream the specific content, with information about the accumulated playback time being included in the request, and determine, in a state where a temporary pause of the playback of the specific content is terminated, whether or not the purchase of the specific content is refundable, and preferably
wherein, in the state where a temporary pause of the playback of the specific content is terminated, when it is determined that the purchase of the specific content is refundable, the processor (170) is configured to store the accumulated viewing time, the current playback point in time, and the last access time at a specific interval of time,
wherein, in the state where a temporary pause of the playback of the specific content is terminated, when it is determined that the purchase of the specific content is not refundable, the processor (170) is configured to store the current playback point in time for the specific content at the specific interval of time, and
wherein, in the state where a temporary pause of the playback of the specific content is terminated, when it is determined that the accumulated playback time for the specific content, the purchase of which is refundable, does not a threshold time, the processor (170) is configured to store the accumulated playback time, the current playback point in time, and the last access time for the specific content at the specific interval of time.

14. The display device (100) of any one of claims 6 to 13, wherein the processor (170) is configured to receive content recommendation information from the content server (300) through the control server (400), receive a specific content playback request from a content list, which varies according to the content recommendation information, determine whether or not a playback time based on the current playback point in time at which the specific content is played back in the display device (100) exceeds a first threshold time, and, when the playback time exceeds the first threshold time, display on the display (180) a dialog box for asking whether or not the purchase of the played-back specific content is approved.

15. The display device (100) of claim 14, wherein, in a case where a content purchase request to approve the purchase of the specific content is not received, the processor (170) is configured to control the display (180) in such a manner that the playback of the specific content is stopped, transfer a request to stop streaming the specific content to the content server (300) through the control server (400),
wherein, in the case where a content purchase request to approve the purchase of the specific content is received, the processor (170) is configured to control the display in such a manner that the specific content is played back starting from a point in time after the first threshold time and store the accumulated playback time and the current playback point in time for the specific content at the specific interval of time, and
wherein, when it is determined that the accumulated playback time exceeds the threshold time, the processor (170) is configured to transfer second information indicating that the accumulated playback time exceeds the threshold time, to the control server (400).
